# EUROPEAN PATENT APPLICATION

(11) **EP 4 691 224 A1**
(43) Date of publication of application: **11.02.2026**
(21) Application number: 24778760.9
(22) Date of filing: 13.02.2024
(51) Int. Cl.: A01G 18/20

(54) **ADDITIVE FOR MUSHROOM CULTURE MEDIUM**

(30) Priority: 29.03.2023 JP 2023053109
(71) Applicant: SETOLAS Holdings, Inc., Takamatsu-shi, Kagawa 760-0026 (JP)
(72) Inventor: NAKAMURA, Hajime, Takamatsu-shi, Kagawa 760-0026 (JP)
(74) Representative: Vossius & Partner Patentanwälte Rechtsanwälte mbB
(86) International application number: PCT/JP2024/004856
(87) International publication number: WO 2024/202615

(57) **Abstract**

Provided is an additive for a mushroom culture medium having novel antacid-characteristics.

An additive for a mushroom culture medium comprising one or more antacids, wherein, as antacid-characteristics by modified Fuchs method using oxalic acid, a pH of 2.2 or more is maintained for at least 35 minutes from the start of the measurement and a pH of 6.8 or less is maintained after 5 minutes from the start of the measurement.

## Description

### TECHNICAL FIELD

The present disclosure relates to an additive for a mushroom culture medium, and a mushroom culture medium comprising the additive for a mushroom culture medium.

### BACKGROUND ART

For mushroom bed cultivation of the artificial cultivation of mushrooms, a culture medium is usually prepared by adding nutrient sources such as rice bran, okara (bean curd refuse), and wheat bran to a base material including sawdust, corn cob meal, bagasse, beet waste, or the like. However, there is a problem in that substances produced from mushrooms accumulate during cultivation, the pH of the culture medium decreases, and the yield of mushrooms decreases.

To maintain an optimum cultivation pH during mushroom cultivation, techniques in which an antacid inorganic substance or the like, that is, an antacid is added to adjust the pH in a culture medium to an optimum pH for mushroom cultivation have been disclosed. Patent Document 1 discloses an additive which is a mushroom culture medium activator containing aluminum, calcium, and magnesium, which are inorganic substances having acidity, and can maintain a pH of 4.0 or more for a certain period or more by a Fuchs test method using hydrochloric acid. Patent Document 2 discloses an additive for growing mushrooms in which powder of calcium aluminosilicate and magnesium aluminometasilicate having a specific integrated particle size value is blended.

### PRIOR ART DOCUMENT

### PATENT DOCUMENTS

Patent Document 1: WO 2021/033458
Patent Document 2: JP-A-2019-122352

### SUMMARY OF THE INVENTION

### PROBLEMS TO BE SOLVED BY THE INVENTION

However, since the optimum pH varies depending on the mushroom species, additives for a mushroom culture medium having various antacid-characteristics are required. Therefore, the present disclosure is directed to provide an additive for a mushroom culture medium having novel antacid-characteristics.

### SOLUTIONS TO THE PROBLEMS

As a result of intensive studies to solve the above problems, the present inventors have found that mushrooms such as Grifola frondosa and Lentinula edodes, which are widely regarded edible, prefer neutral to acidic environments. The present disclosure has been completed based on such findings, and includes the following aspects.

In a first embodiment, the present disclosure provides an additive for a mushroom culture medium, comprising one or more antacids. As antacid-characteristics by modified Fuchs method using oxalic acid, the antacid maintains a pH of 2.2 or more for at least 35 minutes from start of measurement. As antacid-characteristics, the pH of the antacid is maintained at 6.8 or less after 5 minutes from start of measurement.

In a second embodiment of the present disclosure, in the description of the first embodiment, the additive for a mushroom culture medium may comprise two or more antacids.

In a third embodiment of the present disclosure, in the description of the first embodiment or the second embodiment, the antacid may be one or more selected from an aluminum compound, a calcium compound, a magnesium compound, and a sodium compound.

In a fourth embodiment of the present disclosure, in any one of the first embodiment to the third embodiment, the antacid may be one or more selected from aluminum hydroxide, aluminum silicate, magnesium aluminometasilicate, calcium aluminosilicate, calcium aluminosilicate glass, calcium aluminate hydrate, dawsonite, zeolite, calcium carbonate, calcium hydroxide, calcium oxide, calcium silicate, magnesium carbonate, magnesium hydroxide, magnesium oxide, magnesium silicate, sodium hydrogen carbonate, sodium alginate, calcium phosphate, hydroxyapatite, magnesium phosphate, calcium nitrate, magnesium nitrate, calcium sulfate, magnesium sulfate, hydrocalumite, and hydrotalcite.

In a fifth embodiment of the present disclosure, in any one of the first embodiment to the fourth embodiment, the antacid may comprise a combination of
(i) aluminum hydroxide and aluminum silicate,
(ii) aluminum hydroxide and magnesium silicate,
(iii) aluminum hydroxide and calcium carbonate,
(iv) aluminum hydroxide, aluminum silicate, and calcium carbonate, or
(v) aluminum hydroxide, aluminum silicate, magnesium hydroxide, and calcium carbonate.

In a sixth embodiment of the present disclosure, in any one of the third embodiment to the fifth embodiment, a proportion of the aluminum compound may be 10 to 60 wt% as Al₂O₃ in terms of oxide.

In a seventh embodiment of the present disclosure, in any one of the third embodiment to the fifth embodiment, a proportion of the aluminum compound may be 10 to 50 wt% as Al₂O₃ in terms of oxide.

In the seventh embodiment of the present disclosure, in any one of the third embodiment to the fifth embodiment, a proportion of the calcium compound may be 5 to 40 wt% as CaO in terms of oxide.

In an eighth embodiment of the present disclosure, in any one of the third embodiment to the fifth embodiment, the aluminum compound may be 10 to 50 wt% as Al₂O₃ in terms of oxide.

In the eighth embodiment of the present disclosure, in any one of the third embodiment to the fifth embodiment, a proportion of the magnesium compound may be 1 to 20 wt% as MgO in terms of oxide.

In a ninth embodiment of the present disclosure, in any one of the first embodiment to the eighth embodiment, a median diameter of the additive for a mushroom culture medium may be 50 to 900 µm.

In any one of the first embodiment to the eighth embodiment, the median diameter of the additive for a mushroom culture medium may be 10 to 900 µm.

In a tenth embodiment of the present disclosure, in any one of the first embodiment to the ninth embodiment, the additive for a mushroom culture medium may be used for Grifola frondosa.

In an eleventh embodiment of the present disclosure, a mushroom culture medium comprising the additive for a mushroom culture medium according to any one of the first embodiment to the ninth embodiment is provided.

### EFFECTS OF THE INVENTION

According to the present disclosure, an additive for a mushroom culture medium having novel antacid-characteristics is provided.

### BRIEF DESCRIPTION OF THE DRAWINGS

[Fig. 1] Fig. 1 is a graph showing a result of modified Fuchs method of Example 1.
[Fig. 2] Fig. 2 is a graph showing a result of modified Fuchs method of Example 2.
[Fig. 3] Fig. 3 is a graph showing a result of modified Fuchs method of Example 3.
[Fig. 4] Fig. 4 is a graph showing a result of modified Fuchs method of Example 4.
[Fig. 5] Fig. 5 is a graph showing a result of modified Fuchs method of Example 5.
[Fig. 6] Fig. 6 is a graph showing a result of modified Fuchs method of Comparative example 1.
[Fig. 7] Fig. 7 is a graph showing results of modified Fuchs method of Examples 1 to 5 and Comparative example 1.
[Fig. 8] Fig. 8 is a graph showing a result of modified Fuchs method of Example 6.
[Fig. 9] Fig. 9 is a graph showing a result of modified Fuchs method of Example 7.
[Fig. 10] Fig. 10 is a graph showing a result of modified Fuchs method of Example 8.
[Fig. 11] Fig. 11 is a graph showing a result of modified Fuchs method of Example 9.
[Fig. 12] Fig. 12 is a graph showing a result of modified Fuchs method of Example 10.
[Fig. 13] Fig. 13 is a graph showing a result of modified Fuchs method of Comparative example 2.
[Fig. 14] Fig. 14 is a graph showing a result of modified Fuchs method of Comparative example 3.
[Fig. 15] Fig. 15 is a graph showing results of modified Fuchs method of Examples 6 to 10 and Comparative examples 2 and 3.
[Fig. 16] Fig. 16 is a graph showing results of cultivation test 1.
[Fig. 17] Fig. 17 is a graph showing results of cultivation test 2.
[Fig. 18] Fig. 18 is a graph showing results of cultivation test 3.
[Fig. 19] Fig. 19 is a graph showing results of cultivation test 4.
[Fig. 20] Fig. 20 is a graph showing results of cultivation test 5.
[Fig. 21] Fig. 21 is a graph showing results of cultivation test 6.

### DETAILED DESCRIPTION

In one aspect, the present disclosure provides an additive for a mushroom culture medium, comprising or composed of one or more antacids, wherein, as antacid-characteristics by modified Fuchs method using oxalic acid, a pH of 2.2 or more can be maintained for at least 35 minutes from the start of the measurement and a pH of 6.8 or less can be maintained after 5 minutes from the start of the measurement.

In an embodiment, the additive for a mushroom culture medium may comprise two or more, three or more, or four or more antacids. In an embodiment, the one or more antacids may be one or more selected from an aluminum compound, a calcium compound, a magnesium compound, and a sodium compound. These compounds may be natural products or synthetic products. These compounds may also be hydrates. In a specific example, the antacid may be two or more, three or more, or four or more thereof. In a more specific example, the antacid may be these one to five species.

In a more specific embodiment, each compound may independently comprise one or more, for example, two or more, three or more, or four or more thereof, and for example, the antacid may be a combination of two aluminum compounds and one calcium compound, a combination of three aluminum compounds and two magnesium compounds, a combination of two aluminum compounds, one calcium compound, and one magnesium compound, or the like. A method for mixing two or more compounds is not particularly limited, and examples thereof include a method in which an aqueous solution or dispersion of two or more compounds is mixed, dropped, and dried, and a method in which two or more compounds are mixed in a dry state. In a preferred embodiment, two or more compounds are mixed in a dry state.

In an embodiment, the aluminum compound may be one or more selected from aluminum hydroxide, aluminum silicate, magnesium aluminometasilicate, calcium aluminosilicate, calcium aluminosilicate glass, calcium aluminate hydrate, dawsonite, zeolite, hydrocarmite, and hydrotalcite. Preferably, the aluminum compound is one or more selected from aluminum hydroxide and aluminum silicate. More preferably, the aluminum compound is aluminum hydroxide.

In an embodiment, the calcium compound may be one or more selected from calcium carbonate, calcium hydroxide, calcium oxide, calcium silicate, calcium aluminosilicate, calcium aluminosilicate glass, calcium aluminate hydrate, calcium phosphate, octacalcium phosphate, calcium monohydrogen phosphate, calcium dihydrogen phosphate, hydroxyapatite, calcium nitrate, calcium sulfate, and hydrocarmite. Preferably, the calcium compound is calcium carbonate.

In an embodiment, the magnesium compound may be one or more selected from magnesium carbonate, magnesium hydroxide, magnesium oxide, magnesium silicate, magnesium aluminometasilicate, magnesium phosphate, magnesium monohydrogen phosphate, magnesium dihydrogen phosphate, magnesium nitrate, magnesium sulfate, and hydrotalcite. Preferably, the magnesium compound is one or more selected from magnesium silicate and magnesium hydroxide. More preferably, the magnesium compound is magnesium silicate.

In an embodiment, the sodium compound may be one or more selected from sodium bicarbonate, sodium alginate, and dawsonite.

In a specific embodiment, the antacid may be one or more selected from aluminum hydroxide, aluminum silicate, magnesium aluminometasilicate, calcium aluminosilicate, calcium aluminosilicate glass, calcium aluminate hydrate, dawsonite, zeolite, calcium carbonate, calcium hydroxide, calcium oxide, calcium silicate, magnesium carbonate, magnesium hydroxide, magnesium oxide, magnesium silicate, sodium hydrogen carbonate, sodium alginate, calcium phosphate, hydroxyapatite, magnesium phosphate, calcium nitrate, magnesium nitrate, calcium sulfate, magnesium sulfate, hydrocalumite, and hydrotalcite.

In a more specific embodiment, the antacid may comprise or may be composed of a combination of (i) aluminum hydroxide and aluminum silicate, (ii) aluminum hydroxide and magnesium silicate, (iii) aluminum hydroxide and calcium carbonate, (iv) aluminum hydroxide, aluminum silicate, and calcium carbonate, or (v) aluminum hydroxide, aluminum silicate, magnesium hydroxide, and calcium carbonate.

In an embodiment, the proportion of the aluminum compound in the additive for a mushroom culture medium is 10 to 60 wt%, preferably 10 to 50 wt%, more preferably 15 to 45 wt%, and further preferably 20 to 40 wt% as Al₂O₃ in terms of oxide. The proportion may be 10 wt% or more, for example, 15 wt% or more, 20 wt% or more, 25 wt% or more, or 30 wt% or more. The proportion may be 60 wt% or less, for example, 55 wt% or less, 50 wt% or less, 45 wt% or less, 40 wt% or less, or 35 wt% or less.

In the present disclosure, the proportion of the compound compsiring a specific atom in the additive for a mushroom culture medium in terms of oxide means a value obtained by further multiplying a value, which is obtained by dividing a proportion on a weight basis of the compound comprising the specific atom by a molecular weight of the compound comprising the specific atom, by a molecular weight of the oxide of the specific atom when the total weight of the additive for a mushroom culture medium is taken as 100 wt%.

In an embodiment, the proportion of the silicon compound in the additive for a mushroom culture medium is 0 to 65 wt%, preferably 5 to 60 wt%, more preferably 10 to 55 wt%, and further preferably 15 to 50 wt% as SiO₂ in terms of oxide. The proportion may be 5 wt% or more, for example, 10 wt% or more, 15 wt% or more, 20 wt% or more, 25 wt% or more, or 30 wt% or more. The proportion may be 65 wt% or less, for example, 60 wt% or less, 55 wt% or less, 50 wt% or less, 45 wt% or less, 40 wt% or less, or 35 wt% or less.

In an embodiment, the proportion of the calcium compound in the additive for a mushroom culture medium is 0 to 40 wt%, preferably 5 to 35 wt% and more preferably 10 to 30 wt% as CaO in terms of oxide. The proportion may be 5 wt% or more, for example, 10 wt% or more, 15 wt% or more, or 20 wt% or more. The proportion may be 40 wt% or less, for example, 35 wt% or less, 30 wt% or less, or 25 wt% or less.

In an embodiment, the proportion of the magnesium compound in the additive for a mushroom culture medium is 0 to 20 wt%, preferably 1 to 18 wt% and more preferably 2 to 16 wt% as MgO in terms of oxide. The proportion may be 1 wt% or more, for example, 2 wt% or more, 4 wt% or more, 5 wt% or more, 6 wt% or more, or 8 wt% or more. The proportion may be 20 wt% or less, for example, 18 wt% or less, 16 wt% or less, 14 wt% or less, 12 wt% or less, or 10 wt% or less.

The proportions of the aluminum compound, the silicon compound, the calcium compound, and the magnesium compound in the above embodiments can be applied to either the case of comprising each compound alone or the case of comprising two or more compounds. For example, the proportion of the aluminum compound in the additive comprising only the aluminum compound may be 10 to 60 wt% as Al₂O₃ in terms of oxide. As another example, the proportions of the aluminum compound and the calcium compound in the additive comprising the aluminum compound and the calcium compound may be 10 to 50 wt% as Al₂O₃ and 5 to 40 wt% as CaO in terms of oxide, respectively. As still another example, the proportions of the aluminum compound and the magnesium compound in the additive comprising the aluminum compound and the magnesium compound may be 10 to 50 wt% as Al₂O₃ and 1 to 20 wt% as MgO in terms of oxide, respectively.

As antacid-characteristics by modified Fuchs method using oxalic acid, the additive for a mushroom culture medium of the present aspect may maintain a pH of 2.2 or more for at least 35 minutes from start of measurement and a pH of 6.8 or less after 5 minutes from start of measurement. For example, as the antacid-characteristics, a pH of 2.2 or more may be maintained for at least 45 minutes from start of measurement, or a pH of 2.5 or more may be maintained for at least 35 minutes from the start of the measurement. In an embodiment, the additive for a mushroom culture medium of the present aspect can maintain a pH of 2.1 or more for 60 minutes or more as antacid-characteristics by modified Fuchs method using oxalic acid. The procedure of the modified Fuchs method is as described later.

In an embodiment, the additive for a mushroom culture medium of the present aspect is not in the form of powder, but in the form of particle, granule, or pellet. In a specific embodiment, the median diameter of the additive for a mushroom culture medium of the present aspect may be preferably 10 to 900 µm, more preferably 50 to 900 µm, further preferably 100 to 850 µm, and still more preferably 300 to 800 µm. In one aspect, the median diameter of the additive for a mushroom culture medium is 50 to 900 µm, preferably 100 to 850 µm, and more preferably 300 to 800 µm. The median diameter may be preferably 10 µm or more, more preferably 50 µm or more, further preferably 100 µm or more, still more preferably 300 µm or more, or even more preferably 400 µm or more. In one aspect, the median diameter may be 50 µm or more, for example, 75 µm or more, 100 µm or more, 150 µm or more, 200 µm or more, 300 µm or more, or 400 µm or more. The median diameter may be 900 µm or less, for example, 850 µm or less, 800 µm or less, 750 µm or less, 700 µm or less, 650 µm or less, 600 µm or less.

The median diameter in the present disclosure is a median diameter on a volume basis. The median diameter is also referred to as D50, and can be measured by a laser diffraction/scattering particle size distribution measurement method. Specifically, the median diameter can be measured using LMS-2000e manufactured by SEISHIN ENTERPRISE Co., Ltd. Examples of specific measurement conditions include the following.

| | |
|---|---|
| Background measurement time: | 0.5 sec |
| Sample measurement time: | 5.0 sec |
| Air pressure: | 1.0 bar |

The median diameter can be appropriately adjusted according to the type and amount of the antacid used by those skilled in the art. In a specific example, the median diameter can be adjusted by granulation. The granulation method is not particularly limited, but a known method such as a dry granulation method or a wet granulation method can be used. Examples of the dry granulation method include dry roller compactor method and a roll granulator method. Examples of the wet granulation method include a spray drying method, a fluidized bed granulation method, a tumbling granulation method, a stirring granulation method, and an extrusion granulation method.

In an embodiment, when the additive for a mushroom culture medium of the present aspect has the median diameter as described above, the bulkiness of the additive is eliminated, and scattering of dust during work can be suppressed. That is, in a specific embodiment, the additive for a mushroom culture medium of the present aspect is excellent in handleability. Therefore, in an aspect, the present disclosure also relates to a method for improving the handleability of an additive for a mushroom culture medium, including adjusting a median diameter of an antacid.

The additive for a mushroom culture medium comprising two or more antacids may cause separation of the antacids during transportation due to a difference in specific gravity. In an embodiment, the additive for a mushroom culture medium of the present aspect has the median diameter as described above, whereby separation of the antacid during transportation can be suppressed and a stable function can be exhibited. That is, in a specific embodiment, the additive for a mushroom culture medium of the present aspect is effective when it comprises two or more antacids. Therefore, in an aspect, the present disclosure also relates to a method for suppressing separation of an additive for a mushroom culture medium comprising two or more antacids, the method including adjusting median diameters of two or more antacids.

In an embodiment, the additive for a mushroom culture medium of the present aspect has the median diameter as described above, whereby the antacid action in the mushroom culture medium can be slowly exerted over a long period of time. That is, in a specific embodiment, the additive for a mushroom culture medium of the present aspect is particularly effective, for example, in long-term culture that would take 5 months or more for culture.

The additive for a mushroom culture medium of the present aspect can be used for culturing various mushrooms. In an embodiment, the additive for a mushroom culture medium of the present aspect can be used for culturing Grifola frondosa, Lentinus edodes, Flammulina velutipes, Hypsizygus marmoreus, Pholiota microspora, Pleurotus eryngii, Hericium erinaceus, Pleurotus ostreatus, Agaricus bisporus, and the like, but is not limited thereto. In a specific embodiment, the additive for a mushroom culture medium of the present aspect can be suitably used for Grifola frondosa. More specifically, the additive for a mushroom culture medium of the present aspect can be used for, for example, Grifola frondosa, Grifola albicans, Grifola gigantean, Grifola umbellatus, and the like.

The amount of the additive for a mushroom culture medium of the present aspect added to the culture medium is not particularly limited, and can be appropriately adjusted according to the type of mushrooms to be cultured by those skilled in the art and the culture environment. In a specific embodiment, the amount of the additive for a mushroom culture medium of the present aspect added to the culture medium is 0.1 to 1.2 wt%, preferably 0.2 to 1.0 wt%, and more preferably 0.2 to 0.6 wt%. The addition amount may be, for example, 0.1 wt% or more, 0.2 wt% or more, 0.3 wt% or more, or 0.4 wt% or more. The addition amount may be, for example, 1.2 wt% or less, 1.0 wt% or less, 0.8 wt% or less, or 0.6 wt% or less.

By adding the additive for a mushroom culture medium of the present aspect, the yield of mushrooms may increase compared to the case without the additive. In a specific example, by adding the additive for a mushroom culture medium of the present aspect, the yield of mushrooms may increase by 5% or more, for example, 10% or more, or 15% or more, for example, 5 to 60%, compared to the case without the additive.

In an aspect, the present disclosure provides a method for producing an additive for a mushroom culture medium, the method including adjusting median diameters of one or more antacids. All the matters described in the aspect of the additive for a mushroom culture medium can be applied to the present aspect.

In an aspect, the present disclosure provides a mushroom culture medium comprising the additive for a mushroom culture medium of the above aspect. The raw material and formulation of the mushroom culture medium can be appropriately selected according to the type of mushrooms to be cultured by those skilled in the art and culture conditions. In an example, the mushroom culture medium may include a base agent such as sawdust, corn cob meal, or cotton-hull, and a nutrient source such as rice bran, wheat bran, or okara (bean curd refuse). All the matters described in the aspect of the additive for a mushroom culture medium can be applied to the present aspect.

Procedures of various tests and measurements in the present disclosure are as follows.

### <Modified Fuchs Method>

1. A pH meter and a thermostat are switched on. The thermostat is set at 37 ± 2°C.
2. The pH meter is calibrated by using pH standard solutions of pH 4.0, 7.0, and 9.0.
3. In a 300 mL beaker, exactly measured 50 mL of ion-exchanged water is placed, and the beaker is set in the thermostat set at a water temperature of 37°C.
4. The tip of a discharge hose of a metering pump adjusted at a dropping amount of 2.0 ± 0.1 mL/min is set in the 300 mL beaker, and a magnetic stirrer is placed and stirred at 300 rpm.
5. After the liquid temperature reaches 37 ± 0.5°C, 0.5 g of the additive for a mushroom culture medium is added.
6. The metering pump is operated 10 minutes after the sample is charged, and a 0.1 mol/L oxalic acid solution is added dropwise at a dropping amount of 2.0 ± 0.1 mL/min for 110 minutes, and the pH behavior for a total of 120 minutes is measured. The factor value of oxalic acid is 0.990 to 1.010.

### <Accelerated Separation Test>

1. A vibrating sieve (Octagon manufactured by SEISHIN ENTERPRISE Co., Ltd.) is switched on.
2. In a 100 mL polypropylene container, 20 g of the additive for a mushroom culture medium is charged, and the container is set at the center of the vibrating sieve.
3. The vibration condition of the vibrating sieve is set to an intensity level 9, and the vibrating sieve is vibrated for 10 seconds and then set for an interval of 2 seconds.
4. Vibration is turned on and applied for a total of 5 minutes.
5. After the vibration is finished, 0.5 g of the additive for a mushroom culture medium is collected from the upper portion and the lower portion of the polypropylene container using a spatula.

### <Chelate Titration of Calcium Carbonate>

1. In a 100 mL beaker, 20 mL of 2.0 mol/L hydrochloric acid is weighed, 0.5 g of the collected additive for a culture medium is charged, and the resultant is well mixed with a glass rod.
2. The upper portion of the beaker is covered with an evaporation pan, and then heated with a heater at 150°C for 60 minutes for complete dissolution.
3. The completely dissolved additive solution is filtered using No. 5A filter paper.
4. Using a 100 mL volumetric flask, ion-exchanged water is added to the filtered additive solution to dilute the total amount to 100 mL.
5. Using a 5 mL whole pipette, 5 mL of the diluted additive solution is weighed into a 200 mL beaker.
6. 5 mL of an aqueous triethanolamine solution is added to the beaker, and then a 8.0 mol/L aqueous potassium hydroxide solution is added dropwise so that the pH is 13 by a pH meter.
7. After adding 3 to 4 drops of the NN indicator, titration is performed using a 0.01 mol/L aqueous EDTA solution. The end point of the titration is a point at which the color of the aqueous solution changes from red to blue.

### <Chelate Titration of Aluminum Hydroxide>

The experiment is performed as in <Chelate Titration of Calcium Carbonate> until procedures 1 to 5.
6. After 25 mL of a 0.01 mol/L aqueous CyDTA solution is added to the beaker, hexamethylenetetramine is added so that the pH is 5 to 5.5 by a pH meter.
7. After adding 3 to 4 drops of the XO indicator, titration is performed using a 0.01 mol/L aqueous zinc acetate solution. The end point of the titration is a point at which the color of the aqueous solution changes from red to yellow.

### EXAMPLES

The present invention will be described more specifically with reference to the following Examples, but the present disclosure is not limited thereto.

### Test Example 1: Modified Fuchs Method by Component Change of Additive for Culture Medium

### Example 1

In the case of using aluminum hydroxide: 100 wt%, that is, Al₂O₃: 55 wt% in terms of oxide as the additive for a mushroom culture medium, the pH behavior was measured by modified Fuchs method.

### Example 2

The experiment was performed in the same manner as in Example 1 except that as the additive for a mushroom culture medium, aluminum hydroxide: 50 wt% and aluminum silicate: 50 wt%, that is, Al₂O₃: 32 wt% and SiO₂: 32 wt% in terms of oxide were used.

### Example 3

The experiment was performed in the same manner as in Example 1 except that as the additive for a mushroom culture medium, aluminum hydroxide: 50 wt% and magnesium silicate: 50 wt%, that is, Al₂O₃: 27 wt%, SiO₂: 33 wt%, and MgO: 7 wt% in terms of oxide were used.

### Example 4

The experiment was performed in the same manner as in Example 1 except that as the additive for a mushroom culture medium, aluminum hydroxide: 50 wt%, aluminum silicate: 17.5 wt%, magnesium hydroxide: 7.5 wt%, and calcium carbonate: 25 wt%, that is, Al₂O₃: 29 wt%, SiO₂: 11 wt%, MgO: 5 wt%, and CaO: 14 wt% in terms of oxide were used.

### Example 5

The experiment was performed in the same manner as in Example 1 except that as the additive for a mushroom culture medium, aluminum hydroxide: 70 wt% and calcium carbonate: 30 wt%, that is, Al₂O₃: 38 wt% and CaO: 17 wt% in terms of oxide were used.

### Comparative example 1

The experiment was performed in the same manner as in Example 1 except that aluminum hydroxide: 18.3 wt%, calcium carbonate: 64.5 wt%, and magnesium hydroxide: 17.2 wt%, that is, Al₂O₃: 10.0 wt%, CaO: 36.2 wt%, and MgO: 11.9 wt% in terms of oxide described in WO2021/033458 were used as the additive for a mushroom culture medium.

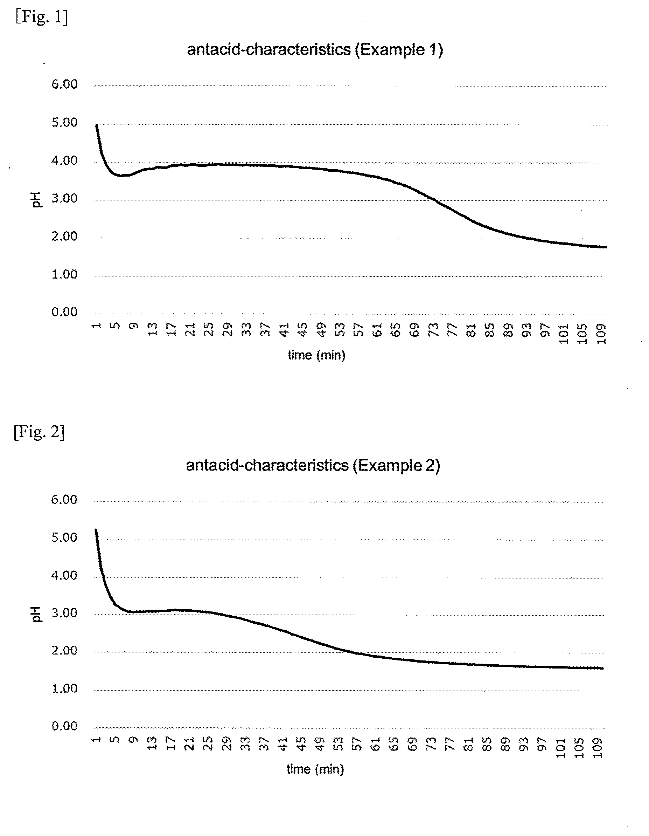

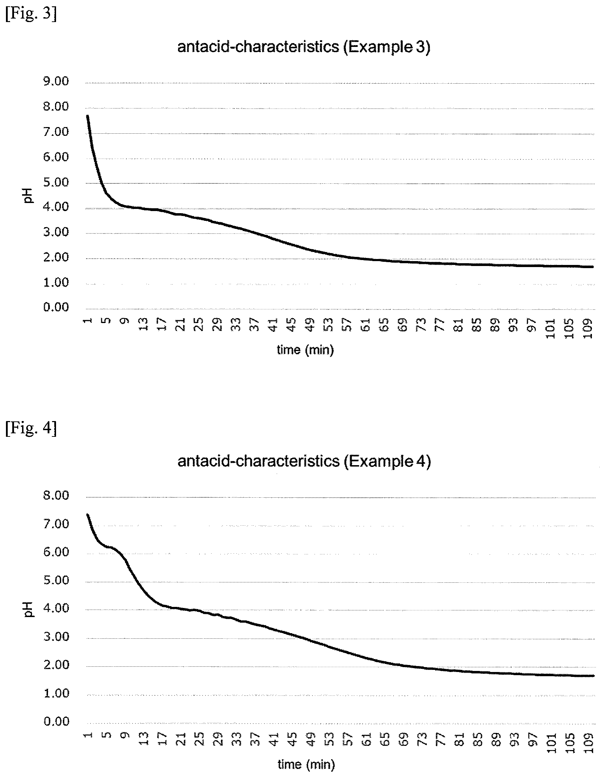

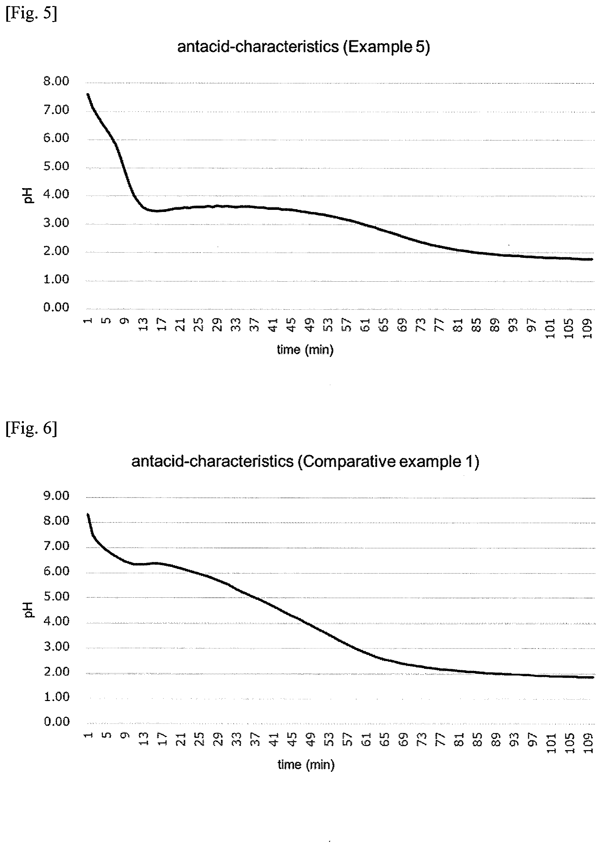

The results of Examples 1 to 5 and Comparative example 1 are demonstrated in Table 1 and Figs. 1 to 7.

**[Table 1]**

| Sample name | pH (after 5 minutes) | pH (after 20 minutes) | pH (after 35 minutes) |
|---|---|---|---|
| Example 1 | 3.68 | 3.92 | 3.93 |
| Example 2 | 3.28 | 3.12 | 2.81 |
| Example 3 | 4.62 | 3.77 | 3.16 |
| Example 4 | 6.24 | 4.08 | 3.60 |
| Example 5 | 6.36 | 3.57 | 3.63 |
| Comparative example 1 | 6.90 | 6.23 | 5.18 |

In all of Examples, the pH of 2.2 or more was maintained for at least 35 minutes from start of measurement and the pH of 6.8 or less was maintained after 5 minutes from start of measurement. In Comparative example 1, the pH after 5 minutes was as high as 6.9.

### Test Example 2: Study of particle size

### Example 6

The experiment was performed in the same manner as in Example 1 except that as the additive for a mushroom culture medium, as the additive for a mushroom culture medium, an additive for a mushroom culture medium having a median diameter of 10 µm obtained by mixing aluminum hydroxide: 50 wt% and aluminum silicate: 50 wt%, that is, Al₂O₃: 32 wt% and SiO₂: 32 wt% in terms of oxide was used.

### Example 7

The experiment was performed in the same manner as in Example 6 except that the additive for a mushroom culture medium was dry-granulated so as to have a median diameter of 90 µm.

### Example 8

The experiment was performed in the same manner as in Example 6 except that the additive for a mushroom culture medium was dry-granulated so as to have a median diameter of 440 µm.

### Example 9

The experiment was performed in the same manner as in Example 6 except that the additive for a mushroom culture medium was dry-granulated so as to have a median diameter of 660 µm.

### Example 10

The experiment was performed in the same manner as in Example 6 except that the additive for a mushroom culture medium was dry-granulated so as to have a median diameter of 700 µm.

### Comparative example 2

The experiment was performed in the same manner as in Example 6 except that the additive for a mushroom culture medium was dry-granulated so as to have a median diameter of 890 µm.

### Comparative example 3

The experiment was performed in the same manner as in Example 6 except that the additive for a mushroom culture medium was dry-granulated so as to have a median diameter of 1100 µm.

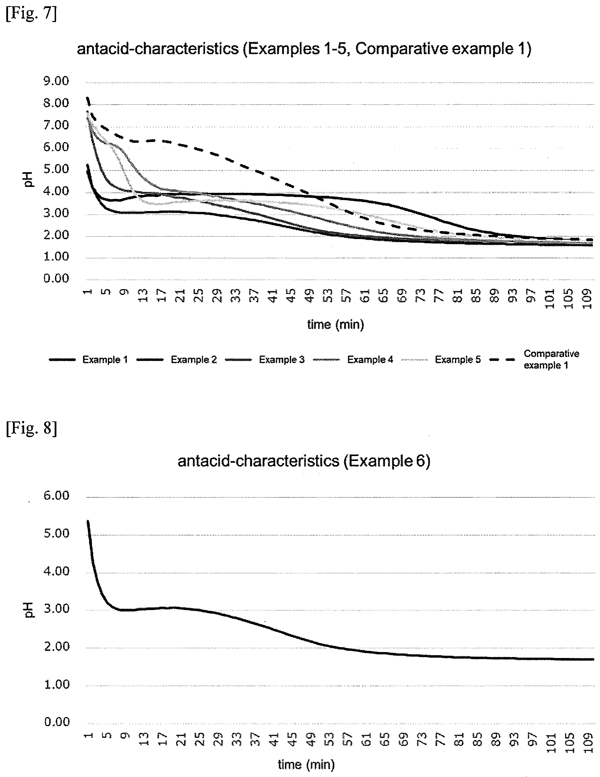

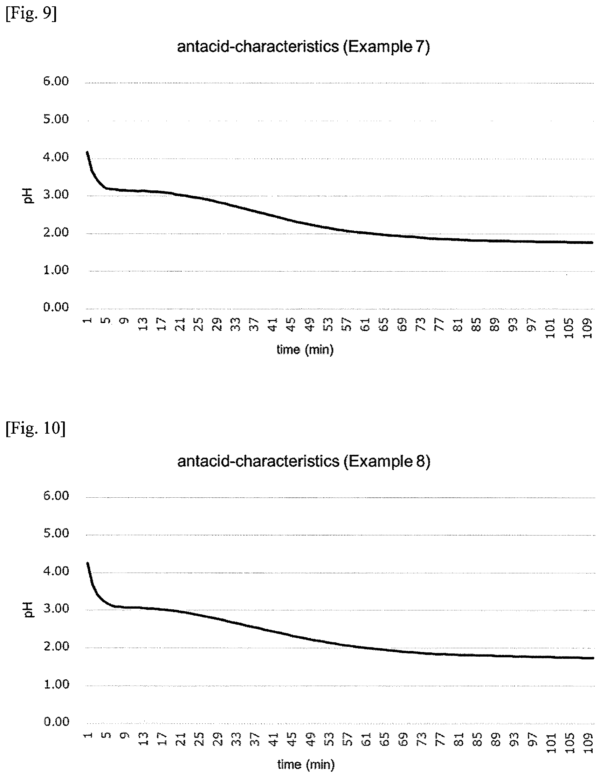

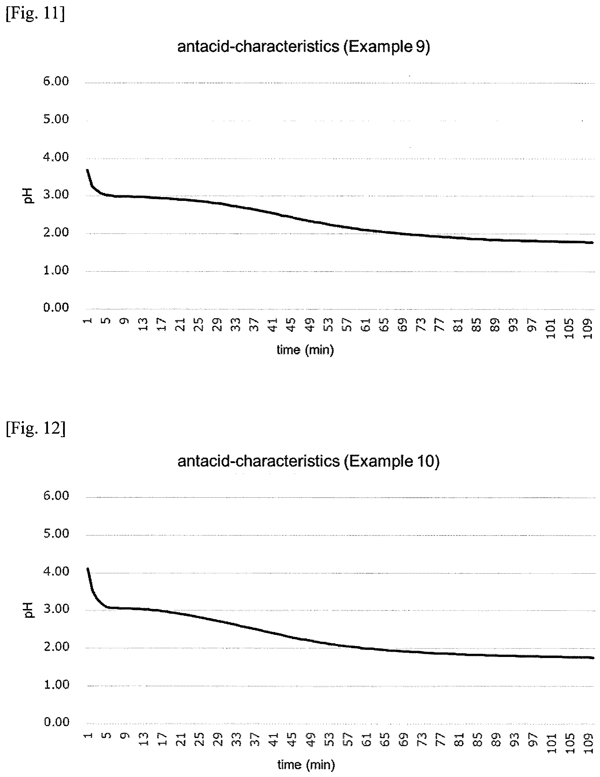

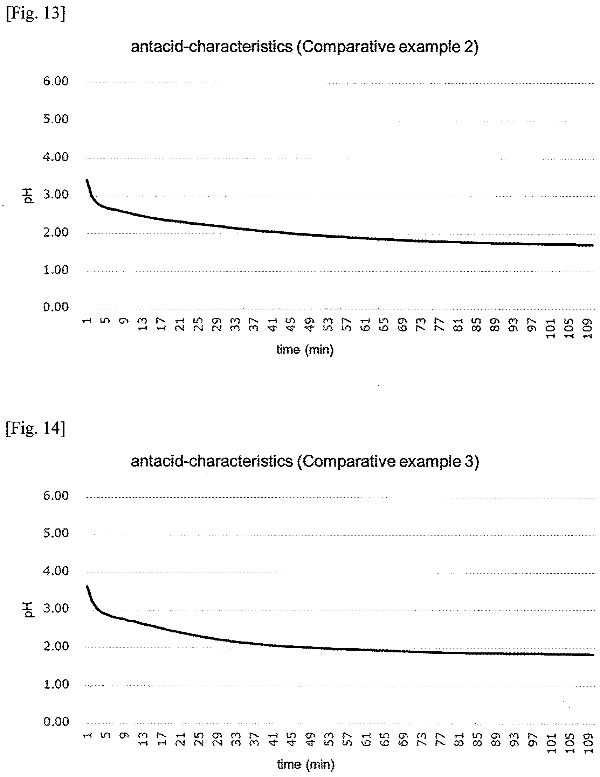

The results of Examples 6 to 10 and Comparative examples 2 and 3 are demonstrated in Table 2 and Figs. 8 to 15.

**[Table 2]**

| Sample name | D50 (µm) | pH (after 5 minutes) | pH (after 20 minutes) | pH (after 35 minutes) |
|---|---|---|---|---|
| Example 6 | 10 | 3.22 | 3.07 | 2.73 |
| Example 7 | 90 | 3.21 | 3.04 | 2.67 |
| Example 8 | 440 | 3.20 | 2.99 | 2.61 |
| Example 9 | 660 | 3.04 | 2.93 | 2.69 |
| Example 10 | 700 | 3.10 | 2.94 | 2.56 |
| Comparative example 2 | 890 | 2.70 | 2.34 | 2.13 |
| Comparative example 3 | 1100 | 2.89 | 2.44 | 2.14 |

As demonstrated in Table 2 and Figs. 8 to 15, the antacid having a median diameter of 10 to 700 µm showed almost the same antacid-characteristics. In the antacids of Comparative examples 2 and 3, the pH after 35 minutes from start of measurement was lower than 2.2. The granulated product did not scatter dust and was excellent in handling.

### Test Example 3: Confirmation of Separability of Additive for Mushroom Culture Medium

An aqueous solution of aluminum hydroxide: 70 wt% and calcium carbonate: 30 wt%, that is, Al₂O₃: 38 wt% and CaO: 17 wt% in terms of oxide was prepared, and Sample No. 1 having a median diameter of 40 µm was prepared as a powder by dropping. Aluminum hydroxide and calcium carbonate were mixed in the above ratio as a dried product to prepare Sample No. 2 having a median diameter of 40 µm. Sample No. 2 was granulated to prepare Sample No. 3 having a median diameter of 710 µm. In order to examine the relationship of separability assuming the time of transporting these samples, separability was evaluated by the accelerated separation test and the chelate titration described above. The results are demonstrated in Table 3.

**[Table 3]**

| Sample name | Preparation method | D50 (µm) | Vibration time (min) | Sample Collection position | Calcium carbonate | Aluminum hydroxide |
|---|---|---|---|---|---|---|
| No. 1-1 | Wet | 40 | 0 | Upper portion | 30 | 70 |
| | | | | Lower portion | 30 | 70 |
| No. 1-2 | | | 5 | Upper portion | 29 | 70 |
| | | | | Lower portion | 29 | 69 |
| No. 2-1 | Dry | 40 | 0 | Upper portion | 30 | 69 |
| | | | | Lower portion | 29 | 69 |
| No. 2-2 | | | 5 | Upper portion | 27 | 73 |
| | | | | Lower portion | 33 | 66 |
| No. 3-1 | Dry | 710 | 0 | Upper portion | 30 | 69 |
| | | | | Lower portion | 30 | 69 |
| No. 3-2 | | | 5 | Upper portion | 29 | 70 |
| | | | | Lower portion | 30 | 69 |

Even when the mixture was mixed as a dry product, the separation of the additive components was not confirmed in a case where the median diameter was 710 µm.

### Test Example 4: Cultivation Test 1

A cultivation test was attempted using components expected to be effective for Grifola frondosa.

### Example 11

As the additive for a mushroom culture medium, aluminum hydroxide: 100 wt%, that is, Al₂O₃: 55 wt% in terms of oxide was used. The culture medium used and the steps up to harvest are as follows.

### <Culture Medium>

In terms of dry weight, 730 g of hardwood sawdust powder, 50 g of rice bran, 50 g of wheat bran, and 150 g of okara (bean curd refuse) were mixed, and water was added thereto to prepare a culture medium having a water content of 62%.

### <Mushroom Spawn Culturing Step>

The additive for a mushroom culture medium was blended in an amount of 0.2 wt% with respect to the total amount of the culture medium and sufficiently mixed, and about 2500 g of the additive was filled in each polypropylene culture bag for mushroom beds (Biopot BS manufactured by Mori & Company, Limited).

Thereafter, the mixture was sterilized with high-pressure steam at 118°C for 90 minutes, then cooled to room temperature in a clean room, and 20 mL of Grifola frondosa (Mori No. 51 produced by Mori & Company, Limited) were inoculated. The culture bag after completion of inoculation was cultured in a dark environment at a temperature of 22 ± 1°C and a relative humidity of 65%.

### <Generation Step>

When the fruit body primordia were raised up to the filter part of the culture bag, the process shifted from the culturing step to the generating step, and culturing was performed under an environment under continuous white LED illumination with a photon flux density of 5.54 µmolm⁻²s⁻¹ at a temperature of 18 ± 1°C and a relative humidity of 95%. The culture bag was cut when the fruit body primordia had grown black to promote the growth of the fruit bodies.

### <Harvest>

Fruit bodies were harvested when the tubes on the underside of the caps had matured, and their weights were measured immediately.

### Example 12

The experiment was performed in the same manner as in Example 11 except that aluminum hydroxide: 50 wt% and aluminum silicate: 50 wt%, that is, Al₂O₃: 32 wt% and SiO₂: 32 wt% in terms of oxide were blended as the additive for a mushroom culture medium in an amount of 0.4 wt% with respect to the total amount of the culture medium.

### Example 13

The experiment was performed in the same manner as in Example 12 except that as the additive for a mushroom culture medium, aluminum hydroxide: 50 wt% and magnesium silicate: 50 wt%, that is, Al₂O₃: 27 wt%, SiO₂: 33 wt%, and MgO: 7 wt% in terms of oxide were used.

### Example 14

The experiment was performed in the same manner as in Example 12 except that as the additive for a mushroom culture medium, aluminum hydroxide: 50 wt% and calcium carbonate: 50 wt%, that is, Al₂O₃: 27 wt% and CaO: 28 wt% in terms of oxide were used.

### Example 15

The experiment was performed in the same manner as in Example 12 except that as the additive for a mushroom culture medium, aluminum hydroxide: 33 wt%, aluminum silicate: 33 wt%, and calcium carbonate: 33 wt%, that is, Al₂O₃: 21 wt%, SiO₂: 21 wt%, and CaO: 19 wt% in terms of oxide were used.

### Example 16

The experiment was performed in the same manner as in Example 12 except that as the additive for a mushroom culture medium, aluminum hydroxide: 50 wt%, aluminum silicate: 17.5 wt%, magnesium hydroxide: 7.5 wt%, and calcium carbonate: 25 wt%, that is, Al₂O₃: 29 wt%, SiO₂: 11 wt%, MgO: 5 wt%, and CaO: 14 wt% in terms of oxide were used.

### Comparative Example 4

The experiment was performed in the same manner as in Example 11 except that the additive for a mushroom culture medium was not added.

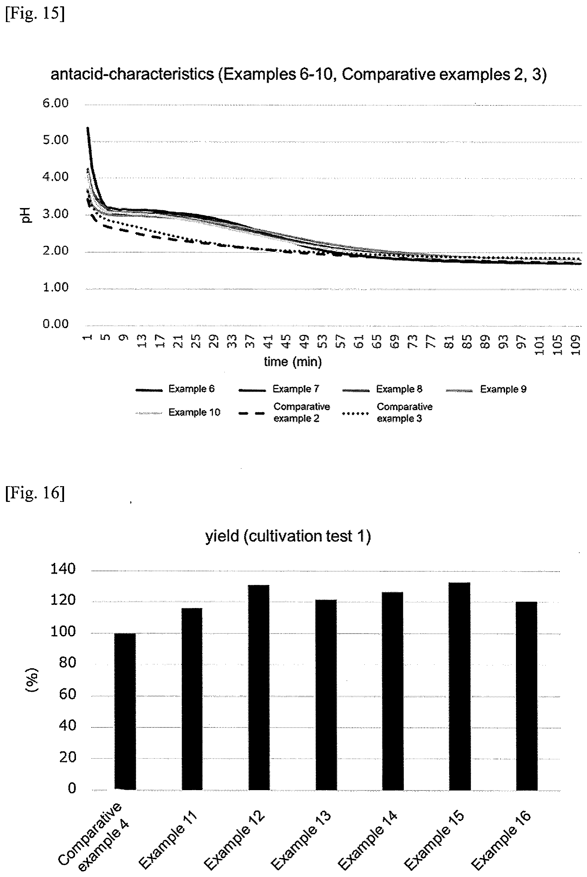

The results of Examples 11 to 16 and Comparative Example 4 are demonstrated in Table 4 and Fig. 16.

**[Table 4]**

| Test group | Additive blending ratio (%) | Yield amount (g) | Yield* (%) |
|---|---|---|---|
| Comparative example 4 | | 479.6 | 100.0 |
| Example 11 | 0.2 | 557.4 | 116.2 |
| Example 12 | 0.4 | 627.8 | 130.9 |
| Example 13 | 0.4 | 583.8 | 121.7 |
| Example 14 | 0.4 | 606.5 | 126.5 |
| Example 15 | 0.4 | 637.0 | 132.8 |
| Example 16 | 0.4 | 578.2 | 120.6 |

| | | | |
|---|---|---|---|
| *Yield: (each Example/Comparative example 4) × 100 (%) | | | |

As demonstrated in Table 4 and Fig. 16, in Grifola frondosa, the effect of increasing the yield was confirmed by adding and mixing aluminum hydroxide, aluminum silicate, magnesium silicate, calcium carbonate, or magnesium hydroxide alone or in combination.

### Test Example 5: Cultivation Test 2

Next, for the components of Example 12, that is, aluminum hydroxide and aluminum silicate, the components of Example 13, that is, aluminum hydroxide and magnesium silicate, the components of Example 14, that is, aluminum hydroxide and calcium carbonate, and the components of Example 15, that is, aluminum hydroxide, aluminum silicate, and calcium carbonate, which were effective in cultivation test 1, the component ratio of the additive was changed for the purpose of finding a suitable component ratio, and a cultivation test was attempted.

### Example 17

The experiment was performed in the same manner as in Example 12 except that as the additive for a mushroom culture medium, aluminum hydroxide: 70 wt% and aluminum silicate: 30 wt%, that is, Al₂O₃: 41 wt% and SiO₂: 19 wt% in terms of oxide were used.

### Example 18

The experiment was performed in the same manner as in Example 12 except that as the additive for a mushroom culture medium, aluminum hydroxide: 30 wt% and aluminum silicate: 70 wt%, that is, Al₂O₃: 24 wt% and SiO₂: 45 wt% in terms of oxide were used.

### Example 19

The experiment was performed in the same manner as in Example 12 except that as the additive for a mushroom culture medium, aluminum hydroxide: 70 wt% and magnesium silicate: 30 wt%, that is, Al₂O₃: 38 wt%, SiO₂: 20 wt%, and MgO: 4 wt% in terms of oxide were used.

### Example 20

The experiment was performed in the same manner as in Example 12 except that as the additive for a mushroom culture medium, aluminum hydroxide: 30 wt% and magnesium silicate: 70 wt%, that is, Al₂O₃: 16 wt%, SiO₂: 46 wt%, and MgO: 10 wt% in terms of oxide were used.

### Example 21

The experiment was performed in the same manner as in Example 12 except that as the additive for a mushroom culture medium, aluminum hydroxide: 70 wt% and calcium carbonate: 30 wt%, that is, Al₂O₃: 38 wt% and CaO: 17 wt% in terms of oxide were used.

### Example 22

The experiment was performed in the same manner as in Example 12 except that as the additive for a mushroom culture medium, aluminum hydroxide: 70 wt%, aluminum silicate: 15 wt%, and calcium carbonate: 15 wt%, that is, Al₂O₃: 40 wt%, SiO₂: 10 wt%, and CaO: 8 wt% in terms of oxide were used.

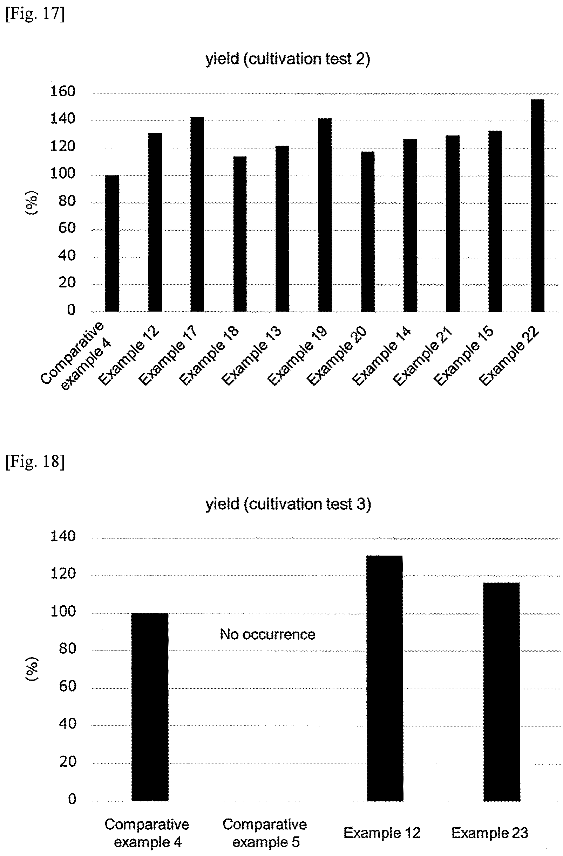

The results of Examples 12 to 15 and 17 to 22 and Comparative Example 4 are demonstrated in Table 5 and Fig. 17.

**[Table 5]**

| Test group | Additive blending ratio (%) | Yield amount (g) | Yield* (%) |
|---|---|---|---|
| Comparative example 4 | | 479.6 | 100.0 |
| Example 12 | 0.4 | 627.8 | 130.9 |
| Example 17 | 0.4 | 683.3 | 142.5 |
| Example 18 | 0.4 | 546.0 | 113.8 |
| Example 13 | 0.4 | 583.8 | 121.7 |
| Example 19 | 0.4 | 680.4 | 141.9 |
| Example 20 | 0.4 | 562.5 | 117.3 |
| Example 14 | 0.4 | 606.5 | 126.5 |
| Example 21 | 0.4 | 621.2 | 129.5 |
| Example 15 | 0.4 | 637.0 | 132.8 |
| Example 22 | 0.4 | 748.3 | 156.0 |

| | | | |
|---|---|---|---|
| *Yield: (each Example/Comparative example 4) × 100 (%) | | | |

As demonstrated in Table 5 and Fig. 17, in Grifola frondosa, when an additive was prepared by mixing aluminum hydroxide and other components, the effect of increasing the yield was confirmed at a component ratio of aluminum hydroxide to the total amount of the additive of 30 to 70 wt%, and the effect of increasing the yield was confirmed to be higher at 50 to 70 wt%.

### Test Example 6: Cultivation Test 3

Next, for the purpose of finding a suitable blending ratio of the additive to the culture medium, the addition amount was changed by using a sample obtained by mixing aluminum hydroxide: 50 wt% and aluminum silicate: 50 wt% in terms of wt%, that is, Al₂O₃: 32 wt% and SiO₂: 32 wt% in terms of oxide, and a cultivation test was attempted.

### Comparative example 5

The experiment was performed in the same manner as in Example 12 except that 1.0 wt% of the additive for a mushroom culture medium was blended with respect to the total amount of the culture medium.

### Example 23

The experiment was performed in the same manner as in Example 12 except that 0.2 wt% of the additive for a mushroom culture medium was blended with respect to the total amount of the culture medium.

The results of Examples 12 and 23 and Comparative examples 4 and 5 are demonstrated in Table 6 and Fig. 18.

**[Table 6]**

| Test group | Additive blending ratio (%) | Yield amount (g) | Yield* (%) |
|---|---|---|---|
| Comparative example 4 | | 479.6 | 100.0 |
| Comparative example 5 | 1.0 | No occurrence | |
| Example 12 | 0.4 | 627.8 | 130.9 |
| Example 23 | 0.2 | 559.0 | 116.6 |

| | | | |
|---|---|---|---|
| *Yield: (each Example/Comparative example 4) × 100 (%) | | | |

As demonstrated in Table 6 and Fig. 18, in Grifola frondosa, a favorable effect of increasing the yield was obtained when the blending ratio of the additive to the mushroom culture medium was in a range of 0.2 to 0.4 wt%. No fruit bodies were generated when 1.0% was added.

### Test Example 7: Cultivation Test 4

Subsequently, a cultivation test was attempted using components expected to be effective for Grifola albicans from the findings of the additive for a mushroom culture medium so far.

### Example 24

The experiment was performed in the same manner as in Example 12 except that Grifola albicans fungi (Mori No. 60 produced by Mori & Company, Limited) were inoculated.

### Example 25

The experiment was performed in the same manner as in Example 13 except that Grifola albicans fungi (Mori No. 60 produced by Mori & Company, Limited) were inoculated.

### Example 26

The experiment was performed in the same manner as in Example 14 except that Grifola albicans fungi (Mori No. 60 produced by Mori & Company, Limited) were inoculated.

### Example 27

The experiment was performed in the same manner as in Example 15 except that Grifola albicans fungi (Mori No. 60 produced by Mori & Company, Limited) were inoculated.

### Example 28

The experiment was performed in the same manner as in Example 16 except that Grifola albicans fungi (Mori No. 60 produced by Mori & Company, Limited) were inoculated.

### Comparative Example 6

The experiment was performed in the same manner as in Comparative Example 4 except that Grifola albicans fungi (Mori No. 60 produced by Mori & Company, Limited) were inoculated.

### Comparative Example 7

The experiment was performed in the same manner as in Example 11 except that Grifola albicans fungi (Mori No. 60 produced by Mori & Company, Limited) were inoculated.

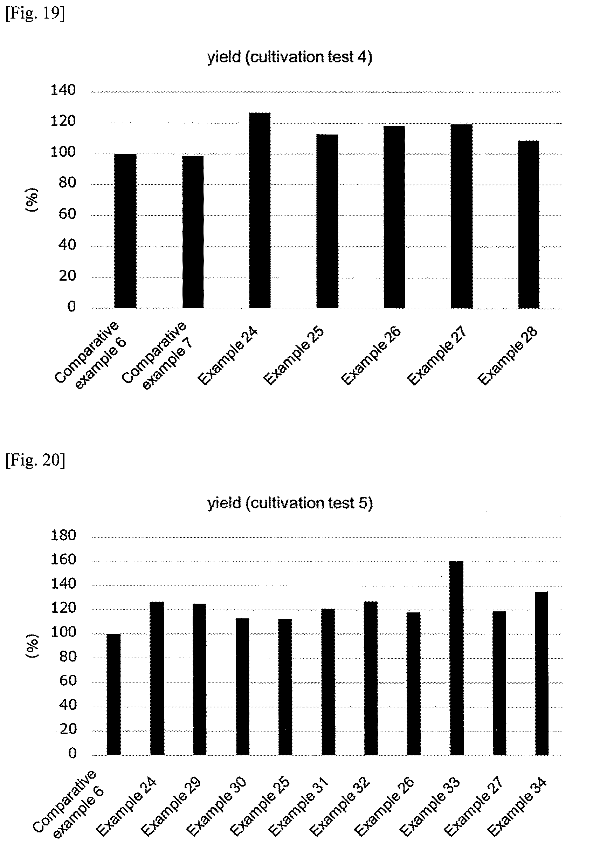

The results of Examples 24 to 28 and Comparative Examples 6 and 7 are demonstrated in Table 7 and Fig. 19.

**[Table 7]**

| Test group | Additive blending ratio (%) | Yield amount (g) | Yield* (%) |
|---|---|---|---|
| Comparative example 6 | | 493.4 | 100.0 |
| Comparative example 7 | 0.2 | 486.6 | 98.6 |
| Example 24 | 0.4 | 624.6 | 126.6 |
| Example 25 | 0.4 | 555.6 | 112.6 |
| Example 26 | 0.4 | 583.7 | 118.3 |
| Example 27 | 0.4 | 588.6 | 119.3 |
| Example 28 | 0.4 | 536.8 | 108.8 |

| | | | |
|---|---|---|---|
| *Yield: (each Example/Comparative example 6) × 100 (%) | | | |

As demonstrated in Table 7 and Fig. 19, in Grifola albicans, the effect of increasing the yield was confirmed by adding and mixing aluminum hydroxide, aluminum silicate, magnesium silicate, calcium carbonate, or magnesium hydroxide alone or in combination.

### Test Example 8: Cultivation Test 5

Next, for the components having been effective in cultivation test 4, the component ratio of the additive was changed for the purpose of finding an optimum component ratio, and a cultivation test was attempted.

### Example 29

The experiment was performed in the same manner as in Example 17 except that Grifola albicans fungi (Mori No. 60 produced by Mori & Company, Limited) were inoculated.

### Example 30

The experiment was performed in the same manner as in Example 18 except that Grifola albicans fungi (Mori No. 60 produced by Mori & Company, Limited) were inoculated.

### Example 31

The experiment was performed in the same manner as in Example 19 except that Grifola albicans fungi (Mori No. 60 produced by Mori & Company, Limited) were inoculated.

### Example 32

The experiment was performed in the same manner as in Example 20 except that Grifola albicans fungi (Mori No. 60 produced by Mori & Company, Limited) were inoculated.

### Example 33

The experiment was performed in the same manner as in Example 21 except that Grifola albicans fungi (Mori No. 60 produced by Mori & Company, Limited) were inoculated.

### Example 34

The experiment was performed in the same manner as in Example 22 except that Grifola albicans fungi (Mori No. 60 produced by Mori & Company, Limited) were inoculated.

The results of Examples 24 to 27 and 29 to 34 and Comparative example 6 are demonstrated in Table 8 and Fig. 20.

**[Table 8]**

| Test group | Additive blending ratio (%) | Yield amount (g) | Yield* (%) |
|---|---|---|---|
| Comparative example 6 | | 493.4 | 100.0 |
| Example 24 | 0.4 | 624.6 | 126.6 |
| Example 29 | 0.4 | 616.8 | 125.0 |
| Example 30 | 0.4 | 557.9 | 113.1 |
| Example 25 | 0.4 | 555.6 | 112.6 |
| Example 31 | 0.4 | 597.6 | 121.1 |
| Example 32 | 0.4 | 626.0 | 126.9 |
| Example 26 | 0.4 | 583.7 | 118.3 |
| Example 33 | 0.4 | 792.0 | 160.5 |
| Example 27 | 0.4 | 588.6 | 119.3 |
| Example 34 | 0.4 | 667.4 | 135.3 |

| | | | |
|---|---|---|---|
| *Yield: (each Example/Comparative example 6) × 100 (%) | | | |

As demonstrated in Table 8 and Fig. 20, in Grifola albicans, when an additive was prepared by mixing aluminum hydroxide and other components, the effect of increasing the yield was confirmed at a component ratio of aluminum hydroxide to the total amount of the additive of 30 to 70 wt%.

### Test Example 9: Cultivation Test 6

Next, for the purpose of finding a suitable blending ratio of the additive to the culture medium, the addition amount was changed by using a sample obtained by mixing aluminum hydroxide: 50 wt% and aluminum silicate: 50 wt%, that is, Al₂O₃: 32 wt% and SiO₂: 32 wt% in terms of oxide, and a cultivation test was attempted.

### Example 35

The experiment was performed in the same manner as in Example 24 except that 1.0 wt% of the additive for a mushroom culture medium was blended with respect to the total amount of the culture medium.

### Example 36

The experiment was performed in the same manner as in Example 24 except that 0.2 wt% of the additive for a mushroom culture medium was blended with respect to the total amount of the culture medium.

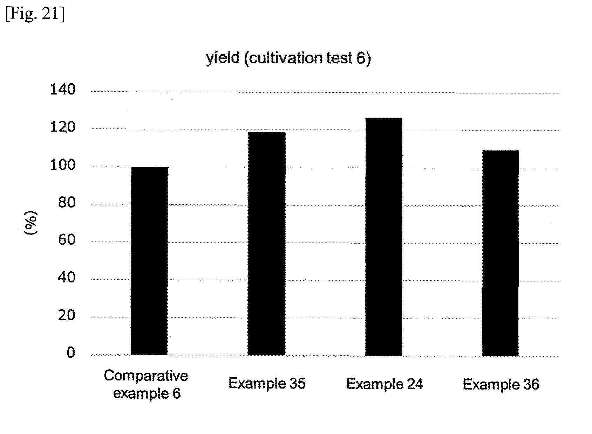

The results of Examples 24, 35, and 36 and Comparative example 6 are demonstrated in Table 9 and Fig. 21.

**[Table 9]**

| Test group | Additive blending ratio (%) | Yield amount (g) | Yield* (g) |
|---|---|---|---|
| Comparative example 6 | | 493.4 | 100.0 |
| Example 35 | 1.0 | 586.9 | 119.0 |
| Example 24 | 0.4 | 624.6 | 126.6 |
| Example 36 | 0.2 | 540.6 | 109.6 |

| | | | |
|---|---|---|---|
| *Yield: (each Example/Comparative example 6) × 100 (%) | | | |

As demonstrated in Table 9 and Fig. 21, in Grifola albicans, a favorable effect of increasing the yield was obtained when the blending ratio of the additive to the mushroom culture medium was in a range of 0.2 to 1.0 wt%. In a range of 0.4 to 1.0 wt%, a more favorable effect of increasing the yield was obtained.

### INDUSTRIAL APPLICABILITY

The present disclosure provides an additive for a mushroom culture medium having novel antacid-characteristics. When a mushroom is cultured using a culture medium using the additive for a mushroom culture medium of the present disclosure, the effect of increasing the yield of the mushroom can be achieved.

## Claims

1. An additive for a mushroom culture medium comprising one or more antacids,
wherein, as antacid-characteristics by modified Fuchs method using oxalic acid, a pH of 2.2 or more is maintained for at least 35 minutes from the start of the measurement and a pH of 6.8 or less is maintained after 5 minutes from the start of the measurement.

2. The additive for a mushroom culture medium according to claim 1, comprising two or more antacids.

3. The additive for a mushroom culture medium according to claim 1 or 2, wherein the antacid is one or more selected from an aluminum compound, a calcium compound, a magnesium compound, and a sodium compound.

4. The additive for a mushroom culture medium according to any one of claims 1 to 3, wherein the antacid is one or more selected from aluminum hydroxide, aluminum silicate, magnesium aluminometasilicate, calcium aluminosilicate, calcium aluminosilicate glass, calcium aluminate hydrate, dawsonite, zeolite, calcium carbonate, calcium hydroxide, calcium oxide, calcium silicate, magnesium carbonate, magnesium hydroxide, magnesium oxide, magnesium silicate, sodium hydrogen carbonate, sodium alginate, calcium phosphate, hydroxyapatite, magnesium phosphate, calcium nitrate, magnesium nitrate, calcium sulfate, magnesium sulfate, hydrocarmite, and hydrotalcite.

5. The additive for a mushroom culture medium according to any one of claims 1 to 4, wherein the antacid comprises a combination of
(i) aluminum hydroxide and aluminum silicate,
(ii) aluminum hydroxide and magnesium silicate,
(iii) aluminum hydroxide and calcium carbonate,
(iv) aluminum hydroxide, aluminum silicate, and calcium carbonate, or
(v) aluminum hydroxide, aluminum silicate, magnesium hydroxide, and calcium carbonate.

6. The additive for a mushroom culture medium according to claim 3, wherein a proportion of the aluminum compound is 10 to 60 wt% as Al₂O₃ in terms of oxide.

7. The additive for a mushroom culture medium according to claim 3, wherein a proportion of the aluminum compound is 10 to 50 wt% as Al₂O₃ and a proportion of the calcium compound is 5 to 40 wt% as CaO in terms of oxide.

8. The additive for a mushroom culture medium according to claim 3, wherein a proportion of the aluminum compound is 10 to 50 wt% as Al₂O₃ and a proportion of the magnesium compound is 1 to 20 wt% as MgO in terms of oxide.

9. The additive for a mushroom culture medium according to any one of claims 1 to 8, wherein a median diameter is 10 to 900 µm.

10. The additive for a mushroom culture medium according to any one of claims 1 to 9, which is used for Grifola frondosa.

11. A mushroom culture medium comprising the additive for a mushroom culture medium according to any one of claims 1 to 9.
